# EUROPÄISCHE PATENTSCHRIFT

(11) **EP 1 321 337 B1**
(45) Veröffentlichungstag und Bekanntmachung des Hinweises auf die Patenterteilung: **03.08.2005**
(21) Anmeldenummer: 02028129.1
(22) Anmeldetag: 18.12.2002
(51) Int. Cl.: B60R 21/26

(54) **Hybrid-Gasgenerator**
Hybrid gas generator
Générateur hybride de gas

(30) Priorität: 20.12.2001 DE 20120660 U
(43) Veröffentlichungstag der Anmeldung: 25.06.2003
(73) Patentinhaber: TRW Airbag Systems GmbH, 84544 Aschau am Inn (DE)
(72) Erfinder: Laucht, Horst, Dr., 83052 Bruckmühl (DE); Seebeck, Wolfram, 83104 Schönau (DE); Seidl, Johann, 84513 Töging (DE); Last, Detlef, Dr., 84453 Mühldorf (DE)
(74) Vertreter: Kitzhofer, Thomas, Dipl.-Ing.

(56) Entgegenhaltungen:
- DE-U- 29 813 961
- DE-U- 29 920 713
- US-A- 5 639 117
- US-A- 5 713 596
- US-A- 6 039 347

## Beschreibung

Die Erfindung betrifft einen Hybrid-Gasgenerator, insbesondere für eine Fahrzeuginsassen-Rückhaltevorrichtung, mit wenigstens einer einen pyrotechnischen Treibsatz enthaltenden Brennkammer und mit mehreren Fluid enthaltenden Fluidkammern.

Die US-A-5 639 117 beschreibt einen Gasgenerator für einen Gassack mit einem zylinderförmigen Gehäuse, welches einen Kolben gleitend aufnimmt, der das Gehäuse in eine Brennkammer und eine Kammer mit flüssigem Treibmittel teilt. Beim Start einer Verbrennung in der Brennkammer durch einen Zünder wird eine Verbindung zwischen der Brennkammer und der Kammer mit flüssigem Treibstoff geschaffen und das flüssige Treibmittel durch den entstehenden Druck auf den Kolben in die Brennkammer gedrückt.

In der US-A-5 713 596 wird ein Gasgenerator mit einer Brennkammer sowie einer Kammer mit flüssigem Treibmittel offenbart. Die Kammer mit flüssigem Treibmittel besteht aus zwei Zylindern mit je einem Kolben, die miteinander in Fluidkontakt stehen. Beim Start der Verbrennung erhöht sich der Druck in der Brennkammer, wobei der Kolben des einen Zylinders durch ein hydraulisches Fluid den Kolben im anderen Zylinder bewegt und das flüssige Treibmittel dadurch in die Brennkammer gedrückt wird.

Die DE 298 13 961 U offenbart einen Gasgenerator für ein Sicherheitssystem mit einer Brennkammer, einer Flüssigkeitskammer, einer Druckkammer und einer Mischkammer. Die Brennkammer enthält dabei einen Festtreibstoff, wobei die Flüssigkeitskammer ein Kühlmittel oder auch ein Kühlmittel und eine brennbare Flüssigkeit enthält. Die Flüssigkeit in der Flüssigkeitskammer wird von dem in die Druckkammer gelangenden Heißgas durch einen Auspreßkolben getrennt.

In der DE 299 20 713 U wird ein Gasgenerator für ein Sicherheitssystem vorgestellt, mit einer Brennkammer die Treibstoff enthält, wobei ein Teil des bei der Verbrennung entstehenden Heißgases dazu verwendet wird, eine in einer Flüssigkeitskammer befindliche Flüssigkeit mittels eines Kolbens in eine Mischkammer zu drücken, in welcher das Verbrennungsgas mit der Flüssigkeit gemischt wird.

Die US-A-6 039 347 stellt einen Gasgenerator vor, der zwei Kolben aufweist, wobei beim Aktivieren des Zünders durch den dabei entstehenden Druckanstieg flüssiges Treibmittel durch die Bewegung der Kolben in die Brennkammer gedrückt wird, wo es verbrennt.

Bei Hybrid-Gasgeneratoren soll das durch Abbrand des pyrotechnischen Treibsatzes entstehende Heißgas mit dem Fluid aus der Fluidkammer vermischt werden, unter anderem, damit das Heißgas gekühlt wird. Damit die Menge des zugemischten Fluids, das brennbar oder nicht brennbar ist, variiert werden kann, ist angedacht, ein Ventil vorzusehen, das beispielsweise in der Verbindung zwischen einer Mischkammer und der Fluidkammer positioniert ist. Ein solches vorzugsweise elektromagnetisch betätigtes Ventil erfordert hohe Stromstärken.

Die Erfindung schafft einen sehr einfach aufgebauten, ohne hohe Stromstärken arbeitenden Hybrid-Gasgenerator, bei dem dennoch die Menge des zugemischten Fluids veränderlich ist.

Dies wird durch den erfindungsgemäßen Hybrid-Gasgenerator erreicht, der mit wenigstens einer einen pyrotechnischen Treibsatz enthaltenden Brennkammer und mit mehreren Fluid enthaltenden Fluidkammern ausgestattet ist. Es sind mehrere bewegliche Kolben vorgesehen, die Fluid aus den mehreren Fluidkammern herausdrücken, wobei die Kolben unabhängig voneinander und/oder wahlweise in Bewegung versetzt werden können. Während beim Stand der Technik nur stets eine Fluidkammer und auch nur ein ihr zugeordneter Kolben vorgesehen waren, sieht die Erfindung vor, daß mehrere Kolben für die Verdrängung des Fluids aus den Fluidkammern verantwortlich sind. Auf diese Weise wird ein Ventil unnötig. Die Kolben können einzeln betätigt werden, so daß sie jeweils allein zum Verdrängen von Fluid führen oder gleichzeitig oder zeitlich versetzt, so daß unterschiedliche Verläufe der eingespritzten Fluidmenge über die Zeit erzielbar sind.

Vorzugsweise ist jedem Kolben eine Aktivierungseinheit zugeordnet, und nach Betätigung der Aktivierungseinheit erfolgt die Bewegung des zugeordneten Kolbens oder die Bewegung wird wenigstens zugelassen. Die Aktivierungseinheit kann somit entweder den Kolben selbst bewegen oder die Bewegung zulassen, beispielsweise indem Gas zur Verschiebung des Kolbens in einen Arbeitsraum eingelassen wird.

Vorzugsweise ist die Aktivierungseinheit ein pyrotechnischer Zünder, der sehr einfach und schnell angesteuert werden kann und auch mit vernachlässigbarer Verzögerung eine Bewegung des Kolbens hervorrufen kann oder zumindest zuläßt. Die Schaltzeit, die durch einen pyrotechnischen Zünder erzielbar ist, ist sehr gering.

Gemäß der bevorzugten Ausführungsform wird durch die Betätigung der Aktivierungseinheit eine Einlaßöffnung für durch den Abbrand des pyrotechnischen Treibsatzes erzeugtes Heißgas in einen an den Kolben angrenzenden Arbeitsraum freigelegt. Damit sorgt das unter hohem Druck stehende Heißgas allein oder zumindest großteils für die Verschiebung der Kolben.

Zudem kann optional vorgesehen sein, daß bei nicht betätigter Aktivierungseinheit die Einlaßöffnung durch den Kolben verschlossen ist und, vorzugsweise, durch die Aktivierungseinheit bei deren Betätigung so weit verschoben wird, bis die Einlaßöffnung freigelegt ist. Die Aktivierungseinheiten, vorzugsweise die Zünder, verschieben deshalb die Kolben minimal, um lediglich die zuvor verschlossenen Einlaßöffnungen freizulegen, so daß pyrotechnisch erzeugtes Heißgas in den zugeordneten Arbeitsraum strömen kann.

Obwohl es möglich wäre, daß eine Fluidkammer durch zwei Kolben begrenzt ist und diese unabhängig und wahlweise betätigt werden, ist vorzugsweise vorgesehen, daß in jeder Fluidkammer ein verschieblicher Kolben vorgesehen ist. Das Fluid wird also in mehrere Kammern aufgeteilt und, je nachdem, wieviel Fluid und wann wieviel Fluid dem Heißgas beigemischt werden soll, werden unterschiedlich viele und zeitlich gegebenenfalls versetzt zueinander mehrere Aktivierungseinheiten betätigt.

Da mehrere Fluidkammern vorgesehen sind, ist es vorteilhaft, wenn diese eine gemeinsame Einspritzöffnung zu einer Mischkammer besitzen, was für einen einfachen Aufbau des Hybrid-Gasgenerators sorgt. In die Mischkammer werden, wie gesagt, das durch Abbrand des pyrotechnischen Materials entstehende Heißgas und das Fluid eingeleitet.

Alternativ können aber auch separate Einspritzöffnungen für jede Fluidkammer oder gruppenweise zusammengefaßte Einspritzöffnungen vorgesehen sein.

Eine kompakte Anordnung der Fluidkammern läßt sich erreichen, wenn diese um eine Achse eines rohrförmigen Gasgeneratorgehäuses herum angeordnet sind.

Zwischen den Fluidkammern kann dabei ein zentraler Zuführkanal für Heißgas aus der Brennkammer angeordnet sein, wobei jeder Fluidkammer ein an einen sie begrenzenden Kolben angrenzender Arbeitsraum zugeordnet ist und jeder Arbeitsraum über eine Einlaßöffnung mit dem Zuführkanal in Strömungsverbindung steht, zumindest wenn der entsprechende Kolben in Bewegung versetzt worden ist. Zumindest heißt in diesem Zusammenhang, daß optional auch jeder Arbeitsraum bei nicht bewegtem Kolben, sozusagen in der Grundstellung, mit dem Zuführkanal strömungsverbunden sein kann.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Längsschnittansicht durch eine Ausführungsform des erfindungsgemäßen Hybrid-Gasgenerators gemäß der Linie I-I in Figur 2 und
- Figur 2 eine Querschnittsansicht durch den Hybrid-Gasgenerator längs der Linie II-II in Figur 1.

In den Figuren ist ein Hybrid-Gasgenerator zum Aufblasen eines Gassacks in einem Fahrzeug dargestellt. Der Hybrid-Gasgenerator hat ein langgestrecktes rohrförmiges Gehäuse 3 mit einer Achse A. An einem axialen Ende ist im Inneren des Gasgenerators eine Brennkammer 5 vorgesehen, die mit einem pyrotechnischen Treibsatz 7 in Form von Treibstofftabletten gefüllt ist. Mit 9 ist ein Zünder zum Anzünden des Treibsatzes 7 bezeichnet.

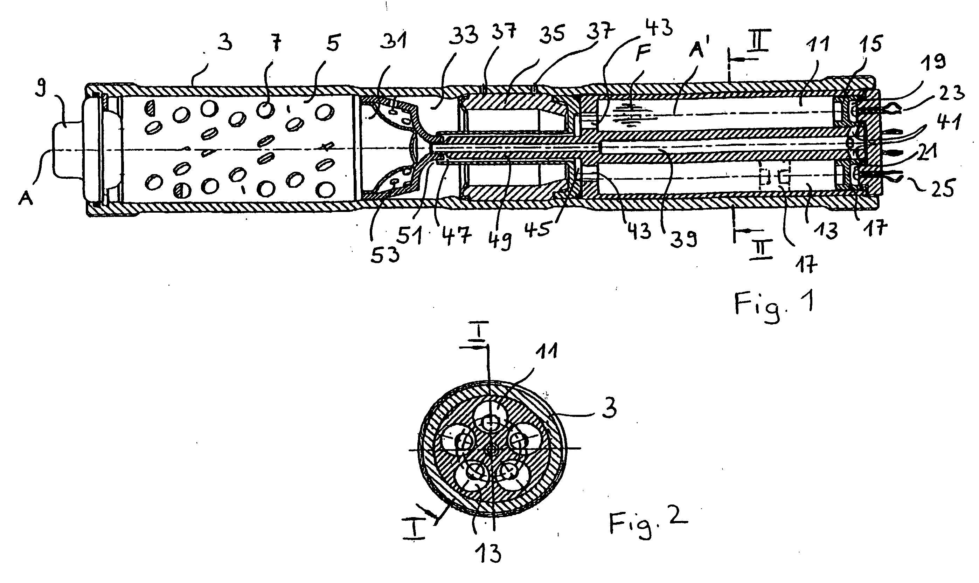

Am gegenüberliegenden Ende sind um die Achse A herum gleichmäßig verteilt mehrere ein brennbares und/oder nicht brennbares Fluid F enthaltende Fluidkammern 11, 13, angeordnet, wobei nur die beiden.Fluidkammern 11, 13 mit Bezugszeichen versehen werden, die übrigen drei Fluidkammern, die in Figur 2 zu erkennen sind, tragen kein Bezugszeichen, sind jedoch identisch zu den Fluidkammern 11, 13 aufgebaut. Die Mittelachsen A' der Fluidkammern 11, 13 und der übrigen Fluidkammern liegen, im Querschnitt gemäß Figur 2 betrachtet, auf einem Kreis um die Achse A.

Jeder der Fluidkammern 11, 13 und der übrigen, nicht mit Bezugszeichen versehenen Fluidkammern ist ein eigener Kolben 15 bzw. 17 zugeordnet, der im Querschnitt H-förmig ist. Auf der der Fluidkammer abgewandten Seite des Kolbens 15 grenzt an jeden Kolben ein Arbeitsraum 19, 21 an, in welchen jeweils ein Zünder 23, 25 ragt. Somit sind insgesamt fünf Fluidkammern, fünf Kolben und fünf pyrotechnische Zünder vorgesehen. Die Zünder stehen mit einer nicht gezeigten Steuereinheit in Verbindung und können getrennt voneinander und unabhängig voneinander angesteuert und damit aktiviert werden. Jeder Zünder bildet eine Aktivierungseinheit für den zugeordneten Kolben und seine Fluidkammer. Zwischen den Fluidkammern und der Brennkammer 5 sind, von der Brennkammer 5 ausgehend, ein Expansionsraum 31 für beim Abbrennen des Treibsatzes 7 entstehendes Heißgas und eine anschließende Mischkammer 33 angeordnet. In der Mischkammer 33 werden das Heißgas und eingespritztes Fluid F vermischt. In der Mischkammer 33 ist auch noch ein rohrförmiges Filter 35 vor radialen Ausströmöffnungen 37 angeordnet.

Ein zentraler Zuführkanal 39 für Heißgas erstreckt sich längs der Achse A von der Expansionskammer 31 bis zum gegenüberliegenden Ende des Gasgenerators, von wo aus Einlaßöffnungen 41 den Zuführkanal 39 mit allen Arbeitsräumen, u.a. auch den Arbeitsräumen 19, 21, verbinden. Im gezeigten Zustand werden die Einlaßöffnungen 41 zu den Arbeitsräumen 19, 21 aber durch die Kolben 15 verschlossen.

An dem dem Kolben 15, 17 entgegengesetzten Ende hat jede Fluidkammer 11 eine Auslaßbohrung 43, wobei die Auslaßbohrungen 43 in eine gemeinsame Kammer 45 münden. Ein ringförmiger Kanal 47, welcher das Rohr 49, in dem der Zuführkanal 39 ist, umgibt, verbindet die Kammer 45 mit der Mischkammer 33. Mit 51 ist die Einspritzöffnung des ringförmigen Kanals 47 in die Mischkammer 33 und damit auch die gemeinsame Einspritzöffnung aller Fluidkammern bezeichnet.

Die Funktionsweise des erfindungsgemäßen Hybrid-Gasgenerators wird im folgenden erläutert.

Sobald ein Unfall detektiert wird, wird der Zünder 9 angesteuert und zündet den Treibsatz 7, so daß das entstehende Heißgas über den Expansionsraum 31 und Überströmöffnungen 53 in die Mischkammer 33 gelangt. Ein Teil des Heißgases strömt aber auch in den Zuführkanal 39 und in die Einlaßöffnungen 41. Je nachdem, wann und wieviel Fluid F in die Mischkammer 33 gelangen und dem Heißgas zugemischt werden soll, werden zum entsprechenden Zeitpunkt ein oder mehrere Zünder aktiviert. Sobald ein Zünder aktiviert wird, entsteht eine geringfügige Menge Gas, die eine Vergrößerung des Arbeitsraums und eine Verschiebung des entsprechenden Kolbens nach links hervorruft. Die Verschiebung ist dabei so groß, daß der jeweilige Kolben die entsprechende Einlaßöffnung 41 nicht mehr überdeckt und Heißgas in den Arbeitsraum 19 einströmen kann. Das unter hohem Druck stehende Heißgas führt dann zu einer Verschiebung des Kolbens bis zu den Auslaßbohrungen 43. Das Fluid F gelangt damit über die Kammer 45 in die Mischkammer 33, wo es das Heißgas kühlt und verdampft oder verbrennt und damit die ausströmende Gasmenge vergrößert. Das entstehende Mischgas gelangt durch das Filter 35 und die Öffnungen 37 in den nicht gezeigten Gassack. Die Zünder 23, 25 und die übrigen, nicht dargestellten Zünder können wahlweise einzeln, zeitgleich oder zeitversetzt aktiviert werden, so daß über die Ansteuerung der Zünder die eingespritzte Fluidmenge als auch der Verlauf der eingespritzten Fluidmenge über die Zeit-variiert werden können.

Elektromagnetische Ventile zur Steuerung der eingespritzten Fluidmenge sind nicht vorgesehen. Die Konstruktion zeichnet sich durch einen einfachen, robusten Aufbau aus.

Anstatt mehrerer baulich getrennt voneinander angeordneter Zünder 23, 25 kann auch ein sogenanntes Zünderarray oder Mikroanzünderfeld verwendet werden, welches ein elektronisches Bauteil in Mikrosystemtechnik ist und welches beispielsweise in der DE 201 04 042 beschrieben ist.

Alternativ können mehrere Fluidkammern oder nur eine Fluidkammer mit brennbarem und die restlichen Fluidkammern mit nicht brennbarem Fluid gefüllt sein. Darüber hinaus müssen die Fluidkammern 11, 13 und die übrigen Fluidkammern auch nicht dasselbe Volumen haben oder mit derselben Fluidmenge gefüllt sein. Durch Änderung dieser Parameter läßt sich ein zeitlich stark variables Mischungsverhältnis Heißgas zu Fluid erzeugen.

## Patentansprüche

1. Hybrid-Gasgenerator, insbesondere für eine Fahrzeuginsassen-Rückhaltevorrichtung, mit wenigstens einer einen pyrotechnischen Treibsatz (7) enthaltenden Brennkammer (5), mit mehreren Fluid (F) enthaltenden Fluidkammern (11, 13), wobei mehrere bewegliche Kolben (15, 17) vorgesehen sind, die Fluid (F) aus den mehreren Fluidkammern (11, 13) herausdrücken, wobei die Kolben (15, 17) unabhängig voneinander und/oder wahlweise in Bewegung versetzt werden können.

2. Hybrid-Gasgenerator nach Anspruch 1, **dadurch gekennzeichnet, daß** jedem Kolben (15, 17) eine Aktivierungseinheit zugeordnet ist und nach Betätigung der Aktivierungseinheit eine Bewegung des zugeordneten Kolbens (15, 17) zugelassen wird oder erfolgt.

3. Hybrid-Gasgenerator nach Anspruch 2, **dadurch gekennzeichnet, daß** die Aktivierungseinheit ein pyrotechnischer Zünder (23, 25) ist.

4. Hybrid-Gasgenerator nach Anspruch 2 oder 3, **dadurch gekennzeichnet, daß** durch Betätigung der Aktivierungseinheit eine Einlaßöffnung (41) für erzeugtes Heißgas aus der Brennkammer zu einem an den zugehörigen Kolben (15, 17) angrenzenden Arbeitsraum (19, 21) freigelegt wird.

5. Hybrid-Gasgenerator nach den Ansprüchen 3 und 4, **dadurch gekennzeichnet, daß** der Kolben (15, 17) bei nicht betätigter Aktivierungseinheit eine zugeordnete Einlaßöffnung (41) verschließt und durch die Aktivierungseinrichtung so weit verschoben wird, bis die Einlaßöffnung (41) freigelegt ist.

6. Hybrid-Gasgenerator nach einem der vorhergehenden Ansprüche, **dadurch gekennzeichnet, daß** mehrere Fluidkammern (11, 13) vorgesehen sind und in jeder Fluidkammer (11, 13) ein verschieblicher Kolben (15, 17) vorgesehen ist.

7. Hybrid-Gasgenerator nach einem der vorhergehenden Ansprüche, **dadurch gekennzeichnet, daß** mehrere Fluidkammern (11, 13) vorgesehen sind, die eine gemeinsame Einspritzöffnung (51) zu einer Mischkammer (33) haben, wobei in die Mischkammer (33) durch Abbrand des pyrotechnischen Materials entstehendes Heißgas und Fluid (F) eingeleitet werden.

8. Hybrid-Gasgenerator nach Anspruch 6 oder 7, **dadurch gekennzeichnet, daß** die Fluidkammern (11, 13) um eine Achse (A) eines rohrförmigen Gasgeneratorgehäuses (3) herum angeordnet sind.

9. Hybrid-Gasgenerator nach einem der Ansprüche 6 bis 8, **dadurch gekennzeichnet, daß** zwischen den Fluidkammern (11, 13) ein zentraler Zuführkanal (39) für Heißgas aus der Brennkammer (5) angeordnet ist, daß jeder Fluidkammer (11, 13) ein an den sie begrenzenden Kolben (15, 17) angrenzender Arbeitsraum (19, 21) zugeordnet ist und daß jeder Arbeitsraum (19, 21) über eine Einlaßöffnung (41) mit dem Zuführkanal (39) in Strömungsverbindung steht, zumindest wenn der Kolben (15, 17) verschoben worden ist.

10. Hybrid-Gasgenerator nach einem der Ansprüche 6 bis 9, **dadurch gekennzeichnet, daß** Fluidkammern (11, 13) unterschiedlichen Volumens vorgesehen sind.

11. Hybrid-Gasgenerator nach einem der Ansprüche 6 bis 10, **dadurch gekennzeichnet, daß** Fluidkammern (11, 13) mit unterschiedlichen Fluiden und/oder Fluidmengen gefüllt sind.

12. Hybrid-Gasgenerator nach einem der vorhergehenden Ansprüche, **dadurch gekennzeichnet, daß** das Fluid brennbar ist.

## Claims

1. A hybrid gas generator, in particular for a vehicle occupant restraint device, comprising at least one combustion chamber (5) containing a pyrotechnic propellant charge (7), a plurality of fluid chambers (11, 13) containing fluid (F), a plurality of movable pistons (15, 17) being provided which push fluid (F) out of the plurality of fluid chambers (11, 13), the pistons (15, 17) being able to be set in motion independently of each other and/or optionally.

2. The hybrid gas generator according to claim 1, **characterized in that** each piston (15, 17) has an activation unit associated with it, and after actuation of the activation unit, a movement of the associated piston (15, 17) is permitted or takes place.

3. The hybrid gas generator according to claim 2, **characterized in that** the activation unit is a pyrotechnic igniter (23, 25).

4. The hybrid gas generator according to claim 2 or 3, **characterized in that** by actuation of the activation unit, an inlet opening (41) is exposed for generated hot gas from the combustion chamber to a working space (19, 21) adjoining the associated piston (15, 17).

5. The hybrid gas generator according to claims 3 and 4, **characterized in that** when the activation unit is in the non-actuated condition, the piston (15, 17) closes an associated inlet opening (41), and is displaced by the activation device so far until the inlet opening (41) is exposed.

6. The hybrid gas generator according to any of the preceding claims, **characterized in that** a plurality of fluid chambers (11, 13) is provided, and a displaceable piston (15, 17) is provided in each fluid chamber (11, 13).

7. The hybrid gas generator according to any of the preceding claims, **characterized in that** a plurality of fluid chambers (11, 13) is provided, having a shared injection opening (51) to a mixing chamber (33), hot gas produced by deflagration of the pyrotechnic material, and fluid (F) being introduced into the mixing chamber (33).

8. The hybrid gas generator according to claim 6 or 7, **characterized in that** the fluid chambers (11, 13) are arranged about an axis (A) of a tubular gas generator housing (3).

9. The hybrid gas generator according to any of claims 6 to 8, **characterized in that** arranged between the fluid chambers (11, 13) is a central supply channel (39) for hot gas from the combustion chamber (5), that associated with each fluid chamber (11, 13) is a working space (19, 21) adjoining the piston (15, 17) delimiting the fluid chamber (11, 13), and that each working space (19, 21) is in fluid communication with the supply channel (39) via an inlet opening (41), at least when the piston (15, 17) has been displaced.

10. The hybrid gas generator according to any of claims 6 to 9, **characterized in that** fluid chambers (11, 13) of different volumes are provided.

11. The hybrid gas generator according to any of claims 6 to 10, **characterized in that** fluid chambers (11, 13) are filled with different fluids and/or quantities of fluid.

12. The hybrid gas generator according to any of the preceding claims, **characterized in that** the fluid is combustible.

## Revendications

1. Générateur de gaz hybride, en particulier pour un système de retenue de passager de véhicule, comportant au moins une chambre de combustion (5) contenant une charge propulsive pyrotechnique (7), plusieurs chambres à fluide (11, 13) contenant du fluide (F), plusieurs pistons (15, 17) mobiles étant prévus, lesquels pressent du fluide (F) hors de plusieurs chambres à fluide (11, 13), les pistons (15, 17) pouvant être mis en mouvements indépendamment l'un de l'autre et/ou sélectivement.

2. Générateur de gaz hybride selon la revendication 1, **caractérisé en ce qu'**à chaque piston (15, 17) est associé une unité d'activation, et après avoir actionné l'unité d'activation, un mouvement du piston associé (15, 17) est autorisé ou a lieu.

3. Générateur de gaz hybride selon la revendication 2, **caractérisé en ce que** l'unité d'activation est un amorceur pyrotechnique (23, 25).

4. Générateur de gaz hybride selon la revendication 2 ou 3, **caractérisé en ce qu'**en actionnant l'unité d'activation, un orifice d'admission (41) est dégagé pour du gaz chaud produit depuis la chambre de combustion vers une chambre de travail (19, 21) adjacente au piston (15, 17) associé.

5. Générateur de gaz hybride selon l'une des revendications 3 et 4, **caractérisé en ce que** lorsque l'unité d'activation n'est pas actionnée, le piston (15, 17) ferme un orifice d'admission (41) associé et est déplacé aussi loin par le dispositif d'activation jusqu'à ce que l'orifice d'admission (41) soit dégagé.

6. Générateur de gaz hybride selon l'une des revendications précédentes, **caractérisé en ce qu'**il est prévu plusieurs chambres à fluide (11, 13) et un piston (15, 17) déplaçable dans chaque chambre à fluide (11, 13).

7. Générateur de gaz hybride selon l'une des revendications précédentes, **caractérisé en ce qu'**il est prévu plusieurs chambres à fluide (11, 13) qui ont un orifice d'injection (51) commun vers une chambre de mélange (33), du gaz chaud produit par combustion du matériau pyrotechnique et du fluide (F) étant introduits dans la chambre de mélange (33).

8. Générateur de gaz hybride selon la revendication 6 ou 7, **caractérisé en ce que** les chambres à fluide (11, 13) sont agencées autour d'un axe (A) d'un boîtier de générateur de gaz (3) tubulaire.

9. Générateur de gaz hybride selon l'une des revendications 6 à 8, **caractérisé en ce que** entre les chambres à fluide (11, 13) est agencé un canal d'amenée (39) pour du gaz chaud provenant de la chambre de combustion (5), **en ce qu'**à chaque chambre à fluide (11, 13) est associé un espace de travail (19, 21) adjacent aux pistons (15, 17) qui délimite la chambre de travail (11, 13), et **en ce que** chaque espace de travail (19, 21) communique par écoulement avec le canal d'amenée (39) via un orifice d'admission (41), au moins lorsque le piston (15, 17) a été déplacé.

10. Générateur de gaz hybride selon l'une des revendications 6 à 9, **caractérisé en ce qu'**il est prévu des chambres à fluide (11, 13) de différents volumes.

11. Générateur de gaz hybride selon l'une des revendications 6 à 10, **caractérisé en ce que** des chambres à fluides (11, 13) sont remplies de différents fluides et/ou de différentes quantités de fluide.

12. Générateur de gaz hybride selon l'une des revendications précédentes, **caractérisé en ce que** le fluide est combustible.
